# EUROPEAN PATENT SPECIFICATION

(11) **EP 2 246 960 B1**
(45) Date of publication and mention of the grant of the patent: **06.04.2016**
(21) Application number: 10159415.8
(22) Date of filing: 08.04.2010
(51) Int. Cl.: H02K 1/18, H02K 15/00, H02K 15/02, H02K 15/095

(54) **Method and apparatus for manufacturing the stator of an electric motor with automatic assembly of the several poles**
Verfahren and Vorrichtung zur Herstellung eines elektrischen Motorstators beim automatischen Zusammenbau der verschiedenen Motorpolen
Méthode et dispositif pour la fabrication du stator d'une machine électrique par l'assemblage des différents poles

(30) Priority: 30.04.2009 IT MI20090742
(43) Date of publication of application: 03.11.2010
(73) Proprietor: Marsilli S.p.A., 26012 Castelleone (CR) (IT)
(72) Inventor: Parati, Gian Battista, 26012, CASTELLEONE CR (IT)
(74) Representative: Modiano, Micaela Nadia

(56) References cited:
- EP-A- 1 388 391
- EP-A- 1 404 000
- DE-B3-102007 024 822
- US-A- 2 575 705
- US-A- 6 081 059
- US-A1- 2002 011 755

## Description

The present invention relates to a method and to an apparatus for manufacturing the stator of an electric motor with automatic assembly of the several poles.

As is known, in the manufacture of the stator of electric motors, there are significant difficulties in performing the automatic insertion of the electric wire that constitutes the coils applied to the several poles, because the wire must be introduced in the several slots with movements that can be very complex, since the slots are arranged circumferentially on the inner surface of the stator.

In order to try to solve the problem, solutions have been already adopted in which the copper wire is wound on the several poles and then such poles are assembled on the inner surface of the frame of the stator.

This embodiment entails considerable manual interventions and therefore the manufacture of the motor is particularly onerous.

The aim of the invention is to solve the problems cited above, by providing a method and an apparatus for manufacturing the stator of an electric motor that make it possible to perform automatically all the assembly steps, thus considerably reducing production costs.

Within this aim, an object of the invention is to provide a method and an apparatus that make it possible to optimally fill the cavity of each pole, utilizing in practice all the spaces available.

Another object of the present invention is to provide an apparatus which, thanks to its particular constructive characteristics, is capable of giving the greatest assurances of reliability and safety in use.

Another object of the present invention is to provide an apparatus that can be obtained easily starting from commonly commercially available elements and materials and that is also competitive from a merely economical point of view.

US-A-2002/0011755 discloses a method and apparatus for constructing a segmented wound member of an N phase electromechanical device. The method includes winding N sets of segments and combining them in a common circular arrangement to form the wound member. The N sets of segments are wound with a single continuous length of wire for each set. Each of the N sets of segments is wound separately from the remaining sets of segments and then combined in the common circular arrangement with the remaining sets of segments to form the wound member.

This aim and these and other objects that will become better apparent hereinafter are achieved by a method for manufacturing the stator of an electric motor with automatic assembly of the several poles, according to the invention, characterized in that it comprises the steps of positioning side by side a plurality of cores that form a stator pole, winding the coil of electric wire on each pole, picking up in succession each pole, arranging it on a substantially circumferential portion, closing said plurality of poles along a circumferential extension, and inserting the poles thus arranged into a frame of the stator of an electric motor.

Further characteristics and advantages of the present invention will become better apparent from the description of a preferred but not exclusive embodiment of a method and of the corresponding apparatus for manufacturing the stator of an electric motor with automatic assembly of the several poles, illustrated by way of nonlimiting example in the accompanying drawings, wherein:

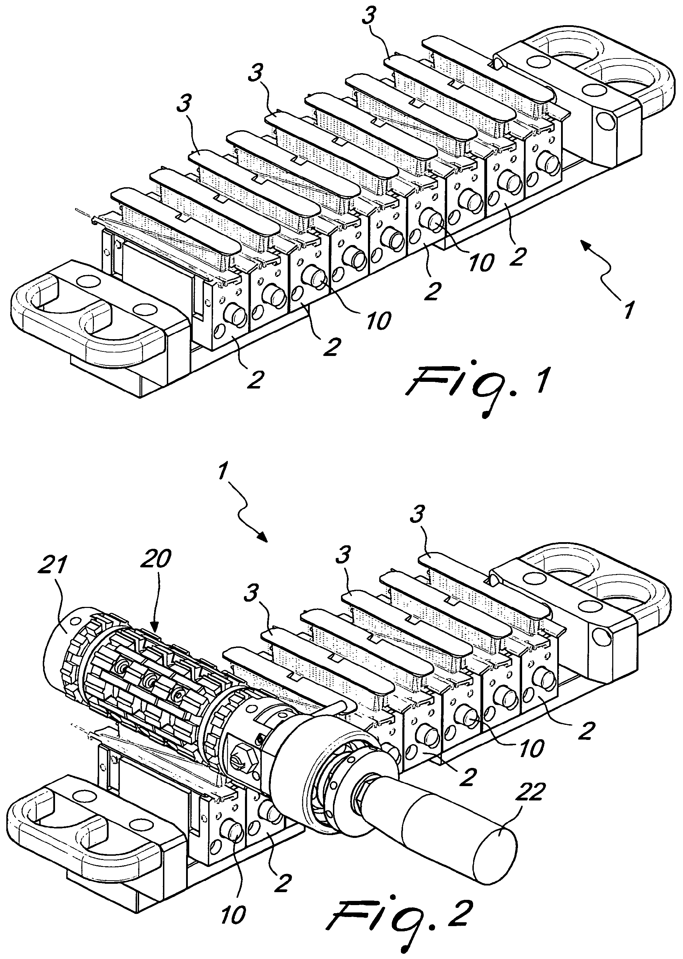

Figure 1 is a schematic perspective view of the plurality of poles arranged side by side;
Figure 2 is a view of the initial step for picking up the poles on which the wire has been wound, by means of a pick-up element;

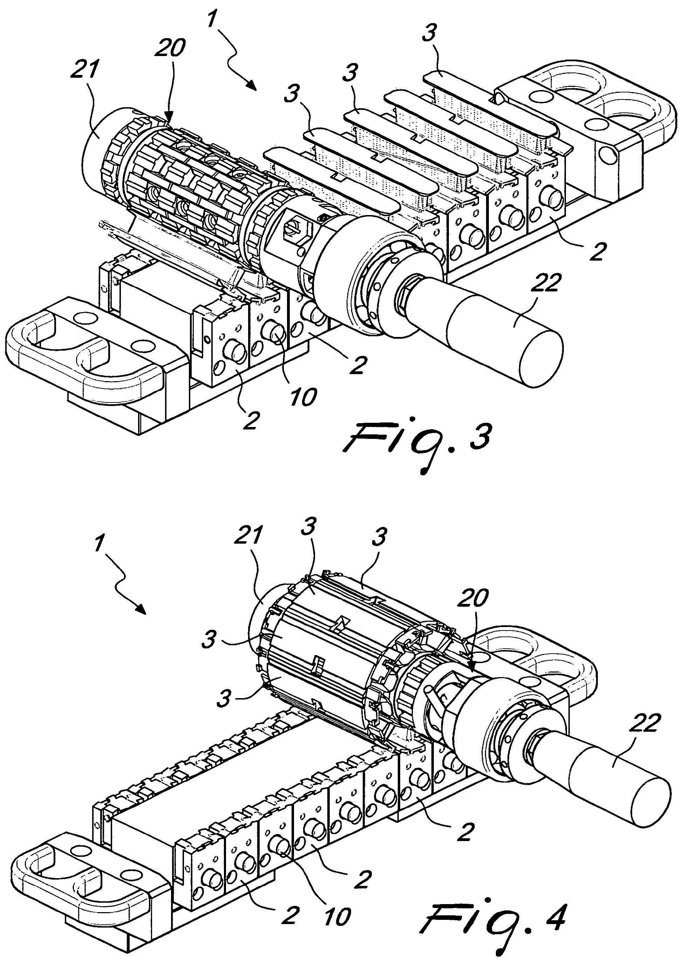

Figure 3 is a view of the initial pick-up step;
Figure 4 is a view of the intermediate pick-up step;

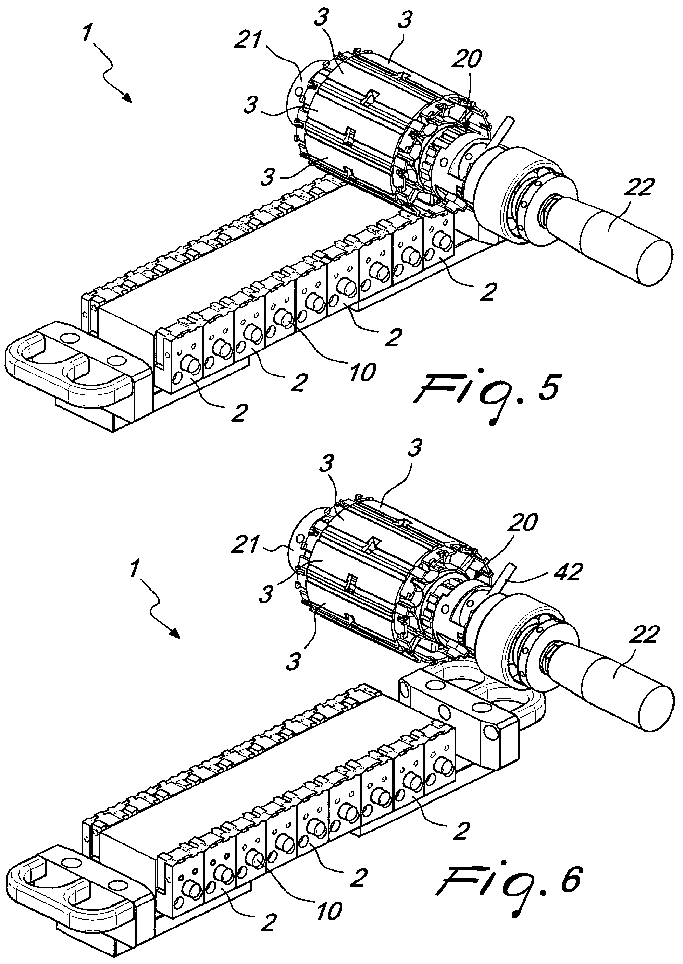

Figure 5 is a view of the final pick-up step;
Figure 6 is a view of the step for separating the pick-up element from the support of the poles;

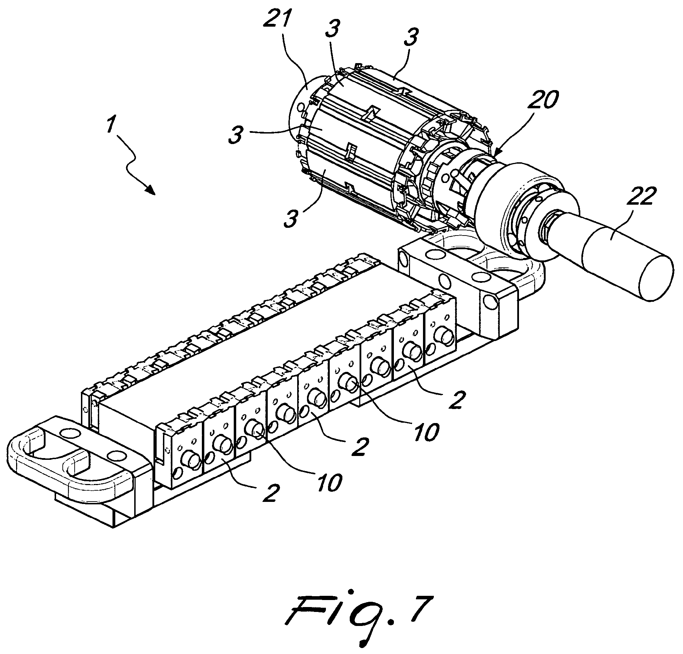

Figure 7 is a view of the step for closing the plurality of poles along a circumferential extension;

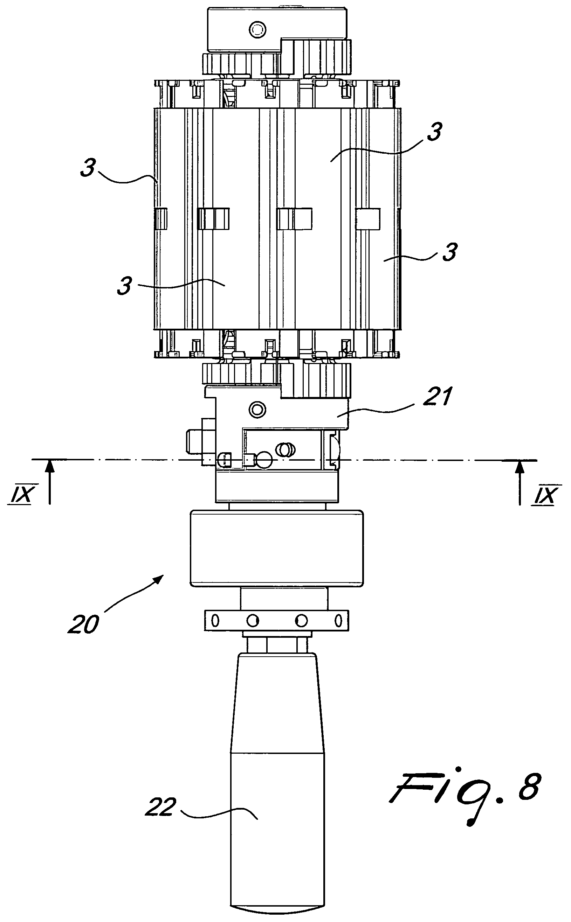

Figure 8 is a plan view of the pick-up element;
Figure 9 is a sectional view taken along the line IX-IX of Figure 8 with the pick-up element in the open position;
Figure 10 is a perspective view of the pick-up element in the open position;
Figure 11 is a transverse sectional view of the pick-up element in the closed position;

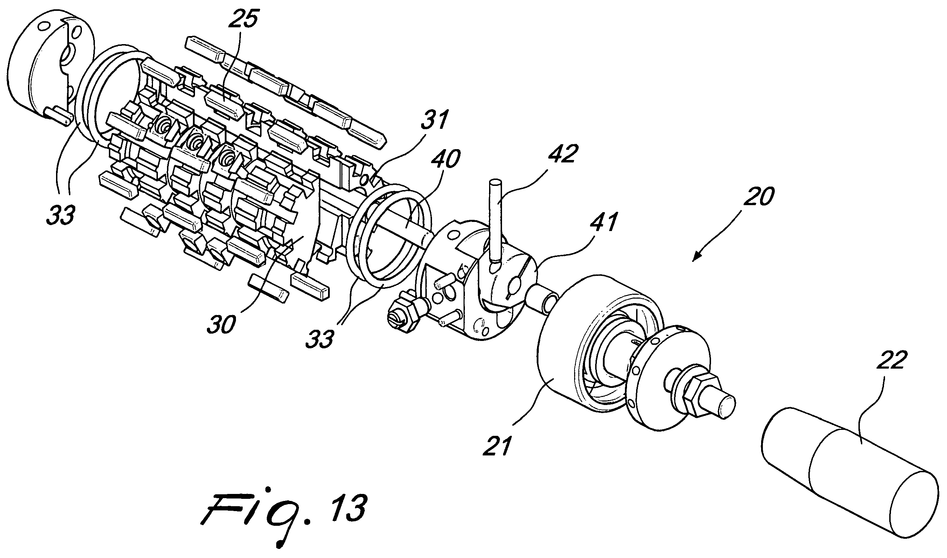

Figure 12 is a view of the pick-up element in the closed position; Figure 13 is a schematic exploded perspective view of the pick-up element;
Figure 14 is a partially sectional view of the stator supporting assembly;
Figure 15 is a transverse sectional view of the means for retaining the poles on the supporting body;
Figure 16 is a sectional view of the release of the single pole.

With reference to the figures, the apparatus for manufacturing the stator of an electric motor with automatic assembly of the several poles comprises a supporting body 1, which forms a plurality of blocks 2, which are arranged side by side and are each provided with means for retaining stator poles, designated by the reference numeral 3.

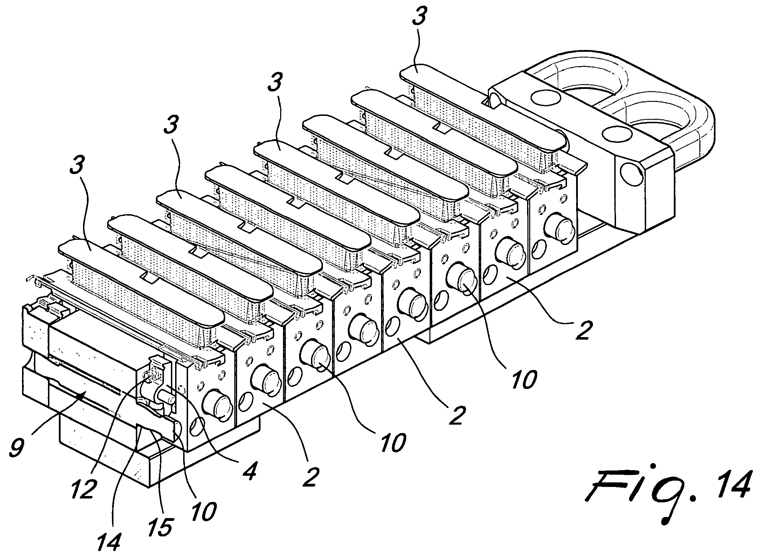

As shown in Figures 14 to 16, the mechanical retention means of each block 2 comprise retention arms 4 which are pivoted in a central portion 5 thereof and form, at one end, a tooth 6, which is inserted in slots 7 provided in the stator pole 3 and, at the other end, a probe 8, which engages a shaft 9 that is supported slidingly on the corresponding block which terminates with a button 10 that protrudes at an axial end of the block.

Divaricating springs 12 operate between the arms 4 and a central body 11 of each block 2 and tend to widen the teeth 6, with release of the grip of the corresponding stator pole 3.

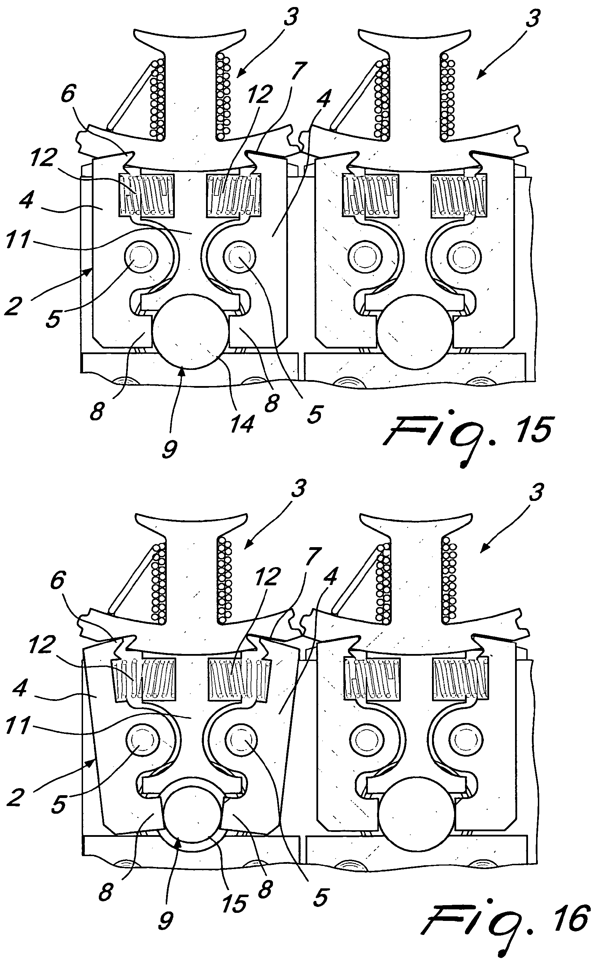

As highlighted in Figures 15 and 16, on the shaft 9 there are wider portions 14 (shown in Figure 15) that keep the teeth 6 engaged in the slots 7, and there are tapering portions 15 that allow divarication of the arms so that they release the poles 3.

The axial translational motion of the shaft 9, performed by actuation of the button 10, makes the probes 8 engage the narrower portions 15, so that the arms divaricate with a consequent release of the several poles 3.

A copper wire is wound onto the stator poles 3 arranged side by side and made of ferromagnetic material for providing the coil, obtaining the complete filling of every cavity of the pole by utilizing swinging wire feeders that are disclosed in a copending patent application by the same Applicant.

Once the winding of the copper wire on all poles has been performed, the poles themselves are picked up by a pick-up element, generally designated by the reference numeral 20, which has a cylindrical body 21 connected rotatably to a supporting shank 22 so that the pick-up element in practice can be made to rotate above the poles, picking up the wound poles in succession.

In order to perform the pick-up, on the surface of the cylindrical body 21 there are magnetic means for pick-up, which are constituted by permanent magnets 25, advantageously made of neodymium, which pick up in succession each pole thanks to the fact that the buttons 10 are actuated in succession, with a consequent disengagement of the individual poles from the respective supporting block 2.

The poles are picked up in succession and are arranged on a substantially cylindrical portion by way of positioning means, which are defined by a fixed sector 30 provided by the cylindrical body, to which a movable sector 31 is hinged in a position that is proximate to the peripheral region. The sectors 30 and 31 support the pick-up magnets 25 and are mutually connected by way of radial return elements which, in the specific embodiment, are constituted by annular elements 33 of the O-Ring type.

The sectors 30 and 31 are separated from one another by means of an eccentric element 40, which is connected to an actuation body 41 provided with an actuation lever 42 that protrudes peripherally and can be moved so as to turn the eccentric element 40 and consequently cause the spacing or the approach of the sectors 30 and 31.

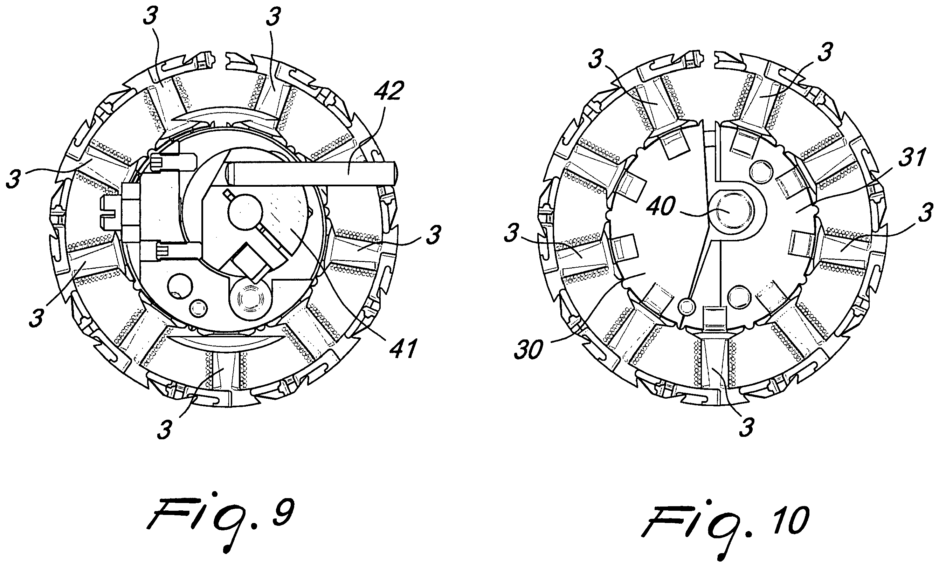

In practical use, once the pick-up of all the poles has been performed while keeping the sectors in the open position, i.e., mutually divaricated, the condition shown schematically in Figures 9 and 10 is reached in which the several poles are connected to the pick-up element and are mutually adjacent with the exception of the pole picked up last, which is spaced from the others.

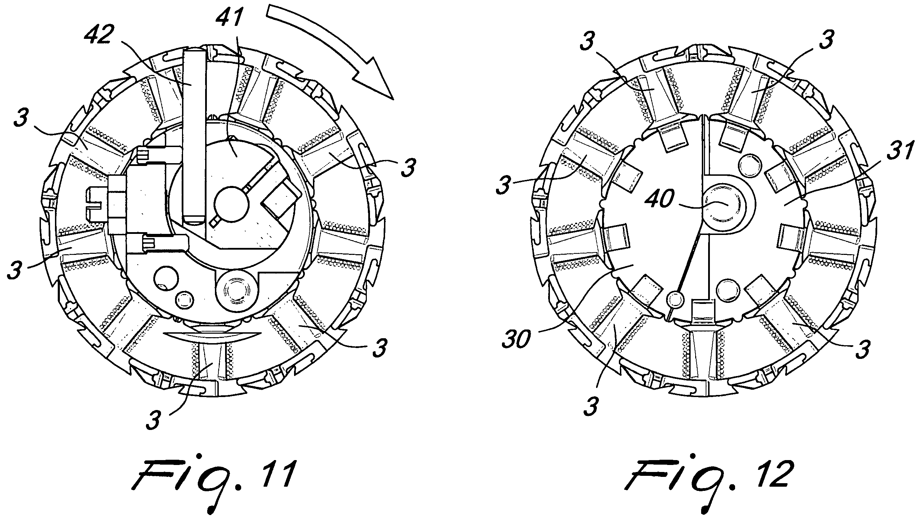

Once all the poles have been picked up, the sectors are closed and the pole picked up last is placed adjacent to the pole picked up first, as shown in Figures 11 and 12, resulting in a circumferential arrangement of the poles picked up.

The pick-up element 20, with the poles arranged circumferentially and connected thereto, is inserted, at this point, in the conventional stator frame of an electric motor, performing its correct coupling, and then the pick-up element is extracted.

With the apparatus cited above there is the possibility of performing automatically a process for obtaining the stator of an electric motor that preliminarily places the several poles mutually side by side, performs automatically the winding of the electric wire in order to obtain the desired coil, and then picks up in succession, by means of the pick-up element 20, the several poles with the electric wire already wound on them, until said poles are arranged circumferentially for their automatic insertion into the frame of an electric motor.

From what has been described above it is thus evident that the invention achieves the intended aim and objects, and in particular the fact is stressed that a method is provided which makes it possible to perform automatically all the steps of construction thanks to the fact that the poles are prearranged on a supporting body in which such poles are retained detachably by means of teeth, which are disengaged in each instance by actuation of the button that allows their divarication.

Another important aspect of the invention further consists in the fact that the several poles are arranged mutually side by side and arranged circumferentially prior to insertion in the frame of the stator, thus enabling an optimum coupling.

The invention thus conceived is susceptible of numerous modifications and variations, all of which are within the scope of the appended claims.

All the details may further be replaced with other technically equivalent elements.

In practice, the materials used, as long as they are compatible with the specific use, as well as the contingent shapes and dimensions, may be any according to requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for manufacturing the stator of an electric motor with automatic assembly of the several poles, **characterized in that** it comprises the steps of positioning side by side in a planar arrangement a plurality of cores that form a stator pole (3), winding the coil of electric wire on each pole (3), picking up in succession each pole (3), arranging it on a substantially circumferential portion, closing said plurality of poles along a circumferential extension, and inserting the poles (3) thus arranged in a frame of the stator of an electric motor.

2. The method according to claim 1, **characterized in that** said plurality of cores for stator poles (3) are arranged side by side by retaining them detachably by way of mechanical retention means (6, 7) and **in that** they are picked up by way of magnetic means (25) with release in succession of the mechanical retention means (6, 7).

3. An apparatus for manufacturing the stator of an electric motor with automatic assembly of the several poles, **characterized in that** it comprises a supporting body (1) which forms a plurality of blocks (2) mutually arranged in a planar configuration and each for retaining a respective stator pole (3) for retaining a plurality of poles (3) positioned in a side by side planar arrangement, a pick-up element (20) being also provided, equipped with magnetic means (25) for picking up said poles (3), positioning means (30, 31) being provided on said pick-up element (20) for arranging on a closed circular surface said poles (3) picked up from said supporting body (1).

4. The apparatus according to claim 3, **characterized in that** said mechanical means for the detachable retention of said poles (3) comprise retention arms (4), which are pivoted in a central portion (5) and define, at one end, teeth (6) that can be inserted in slots (7) provided on said stator pole (3) and, at the other end, a probe (8) that can engage a shaft (9) which is supported slidingly in the corresponding block (2) and terminates with a button (10) that protrudes from an axial end of said block (2).

5. The apparatus according to claim 4, **characterized in that** said shaft (9) has wider portions (14), which can be engaged by said probe (8) for keeping said pole (3) locked on said supporting body (1), as well as tapering portions (15) for divaricating said arms for the release of said pole (3).

6. The apparatus according to one or more of claims 3-5, **characterized in that** said pick-up element (20) comprises a cylindrical body (21), which is supported rotatably by a supporting shank (22), on said cylindrical body (21) said magnetic means (25) being provided, supported by said positioning means (30, 31) for arranging said poles (3) in a closed circular configuration.

7. The apparatus according to claim 6, **characterized in that** said retention means for arranging said poles in a closed circular position comprise a fixed sector (30), which is provided on said cylindrical body (21), to which a movable sector (31) is hinged in a portion that is proximate to the peripheral region, said sectors (30, 31) supporting said magnetic means (25) and being connected to radial return elements (33), said sectors (30, 31) being separated by means of an eccentric element (40), which is connected to an actuation body (41) provided with an actuation lever (42) that protrudes peripherally from said cylindrical body (21).

8. The apparatus according to one or more of claims 3-7, **characterized in that** said magnetic means (25) are constituted by permanent magnets (25) made of neodymium.

9. The apparatus according to claim 7, **characterized in that** said radial return elements are constituted by annular elements (33) of the O-Ring type.

## Patentansprüche

1. Verfahren zur Herstellung des Stators eines Elektromotors mit automatischem Zusammenbau der verschiedenen Pole, **dadurch gekennzeichnet, dass** es die Schritte Positionieren einer Mehrzahl von Kernen, die einen Statorpol (3) bilden, nebeneinander in einer planaren Anordnung, Wickeln der Spule aus elektrischem Draht an jedem Pol (3), Aufnehmen aller Pole (3) nacheinander, Anordnen jedes Pols im Wesentlichen auf einem Umfangsabschnitt, Zusammenrücken dieser Mehrzahl von Polen entlang einer Umfangserstreckung und Einsetzen der derart angeordneten Pole (3) in einen Rahmen des Stators eines Elektromotors umfasst.

2. Verfahren nach Anspruch 1, **dadurch gekennzeichnet, dass** die Mehrzahl von Kernen für Statorpole (3) nebeneinander angeordnet werden, wobei sie durch mechanische Haltemittel (6, 7) lösbar gehalten werden, und dadurch, dass sie durch magnetische Mittel (25) nacheinander bei Freigabe der mechanischen Haltemittel (6, 7) aufgenommen werden.

3. Vorrichtung zur Herstellung des Stators eines Elektromotors mit automatischem Zusammenbau der verschiedenen Pole, **dadurch gekennzeichnet, dass** sie einen Trägerkörper (1) umfasst, der eine Mehrzahl von Blöcken (2) bildet, die in einer planaren Konfiguration zueinander angeordnet sind und jeweils zum Halten eines entsprechenden Statorpols (3) vorgesehen sind zum Halten einer Mehrzahl von Polen (3), die nebeneinander in einer planaren Anordnung positioniert sind, wobei auch ein Aufnahmeelement (20) vorgesehen ist, das mit magnetischen Mitteln (25) zum Aufnehmen der Pole (3) ausgerüstet ist, wobei Positionierungsmittel (30, 31) auf dem Aufnahmeelement (20) vorgesehen sind, um die vom Trägerkörper (1) aufgenommenen Pole (3) auf einer geschlossenen Kreisfläche anzuordnen.

4. Vorrichtung nach Anspruch 3, **dadurch gekennzeichnet, dass** die mechanischen Mittel zum lösbaren Halten der Pole (3) Haltearme (4) umfassen, die in einem mittleren Abschnitt (5) schwenkbar gelagert sind und an einem Ende Zähne (6) definieren, die in auf dem Statorpol (3) vorgesehene Schlitze (7) eingesetzt werden können, und am anderen Ende eine Sonde (8) definieren, die an einer Achse (9) angreifen kann, die verschiebbar im korrespondierenden Block (2) gelagert ist und mit einem Knopf (10) endet, der von einem axialen Ende des Blocks (2) abragt.

5. Vorrichtung nach Anspruch 4, **dadurch gekennzeichnet, dass** die Achse (9) verbreiterte Abschnitte (14) aufweist, an denen die Sonde (8) angreifen kann, so dass der Pol (3) auf dem Trägerkörper (1) arretiert bleibt, sowie verjüngte Abschnitte (15) aufweist, so dass die Arme sich zum Freigeben des Pols (3) spreizen.

6. Vorrichtung nach einem oder mehreren der Ansprüche 3 bis 5, **dadurch gekennzeichnet, dass** das Aufnahmeelement (20) einen zylindrischen Körper (21) umfasst, der durch einen Trägerschaft (22) drehbar gelagert ist, wobei auf dem zylindrischen Körper (21) die magnetischen Mittel (25) vorgesehen und von den Positionierungsmitteln (30, 31) getragen sind, um die Pole (3) in einer geschlossenen kreisförmigen Konfiguration anzuordnen.

7. Vorrichtung nach Anspruch 6, **dadurch gekennzeichnet, dass** die Haltemittel zum Anordnen der Pole in einer geschlossenen kreisförmigen Position einen festgelegten Sektor (30) umfassen, der auf dem zylindrischen Körper (21) vorgesehen ist, an dem ein beweglicher Sektor (31) in einem Abschnitt gelenkig angebracht ist, der nahe dem peripheren Bereich liegt, wobei die Sektoren (30, 31) die magnetischen Mittel (25) tragen und mit radialen Rückführelementen (33) verbunden sind, wobei die Sektoren (30, 31) mittels eines Exzenterelements (40) getrennt sind, das mit einem Betätigungshebel (42) versehenen Betätigungskörper (41) verbunden ist, der peripher vom zylindrischen Körper (21) abragt.

8. Vorrichtung nach einem oder mehreren der Ansprüche 3 bis 7, **dadurch gekennzeichnet, dass** die magnetischen Mittel (25) durch Permanentmagnete (25) aus Neodym gebildet sind.

9. Vorrichtung nach Anspruch 7, **dadurch gekennzeichnet, dass** die radialen Rückführelemente durch ringförmige Elemente (33) vom Typ eines O-Rings gebildet sind.

## Revendications

1. Procédé de fabrication du stator d'un moteur électrique avec assemblage automatique des différents pôles, **caractérisé en ce qu'**il comprend les étapes suivantes : positionner côte à côte dans un agencement plan une pluralité de noyaux qui forment un pôle de stator (3), enrouler la bobine de fil électrique sur chaque pôle (3), saisir l'un après l'autre chaque pôle (3), le placer sur une partie substantiellement circonférentielle, fermer ladite pluralité de pôles le long d'une extension circonférentielle, et insérer les pôles (3) ainsi agencés dans une carcasse du stator d'un moteur électrique.

2. Procédé selon la revendication 1, **caractérisé en ce que** les noyaux de ladite pluralité de noyaux pour pôles de stator (3) sont disposés côte à côte en les retenant de manière détachable à l'aide d'un moyen de retenue mécanique (6, 7) et **en ce qu'**ils sont saisis à l'aide d'un moyen magnétique (25) avec libération à la suite du moyen de retenue mécanique (6, 7).

3. Appareil de fabrication du stator d'un moteur électrique avec assemblage automatique des différents pôles, **caractérisé en ce qu'**il comprend un corps de support (1) qui forme une pluralité de blocs (2) agencés mutuellement dans une configuration plane et servant chacun à retenir un pôle de stator respectif (3) pour retenir une pluralité de pôles (3) positionnés en un agencement plan côte à côte, un élément de saisie (20) étant aussi prévu, équipé d'un moyen magnétique (25) pour saisir lesdits pôles (3), un moyen de positionnement (30, 31) étant prévu sur ledit élément de saisie (20) pour disposer sur une surface circulaire fermée lesdits pôles (3) saisis sur ledit corps de support (1).

4. Appareil selon la revendication 3, **caractérisé en ce que** ledit moyen mécanique pour la retenue détachable desdits pôles (3) comprend des bras de retenue (4), qui pivotent dans une partie centrale (5) et définissent, à une extrémité, des dents (6) qui peuvent être insérées dans des fentes (7) prévues sur ledit pôle de stator (3) et, à l'autre extrémité, une sonde (8) qui peut se mettre en prise avec un axe (9) qui est supporté de manière glissante dans le bloc correspondant (2) et se termine par un bouton (10) qui fait saillie depuis une extrémité axiale dudit bloc (2).

5. Appareil selon la revendication 4, **caractérisé en ce que** ledit axe (9) a des parties plus larges (14), qui peuvent être mises en prise par ladite sonde (8) pour maintenir ledit pôle (3) bloqué sur ledit corps de support (1), ainsi que des parties rétrécies (15) pour écarter lesdits bras pour la libération dudit pôle (3).

6. Appareil selon l'une ou plusieurs des revendications 3 à 5, **caractérisé en ce que** ledit élément de saisie (20) comprend un corps cylindrique (21), qui est supporté à rotation par une tige de support (22), ledit moyen magnétique (25) étant placé sur ledit corps cylindrique (21) et étant supporté par ledit moyen de positionnement (30, 31) pour agencer lesdits pôles (3) en une configuration circulaire fermée.

7. Appareil selon la revendication 6, **caractérisé en ce que** ledit moyen de retenue pour agencer lesdits pôles en une position circulaire fermée comprend un secteur fixe (30), qui est placé sur ledit corps cylindrique (21), sur lequel est articulé un secteur mobile (31) dans une partie qui est proche de la région périphérique, lesdits secteurs (30, 31) supportant ledit moyen magnétique (25) et étant connectés à des éléments de retour radiaux (33), lesdits secteurs (30, 31) étant séparés au moyen d'un élément excentrique (40), qui est connecté à un corps d'actionnement (41) pourvu d'un levier d'actionnement (42) qui fait saillie de façon périphérique depuis ledit corps cylindrique (21).

8. Appareil selon l'une ou plusieurs des revendications 3 à 7, **caractérisé en ce que** ledit moyen magnétique (25) est constitué par des aimants permanents (25) en néodyme.

9. Appareil selon la revendication 7, **caractérisé en ce que** lesdits éléments de retour radiaux sont constitués par des éléments annulaires (33) du type joint torique.
